Europäisches Patentamt

European Patent Office

Office européen des brevets

(19)

(11) Numéro de publication: **0 003 703**
**B1**

(12) **FASCICULE DE BREVET EUROPEEN**

(45) Date de publication du fascicule du brevet: 09.02.83

(51) Int. Cl.³: **G 05 D 9/00, G 05 D 9/04, F 16 K 7/07, B 28 C 7/16**

(21) Numéro de dépôt: **79400076.0**

(22) Date de dépôt: **06.02.79**

(54) Procédé et dispositif de réglage du débit de pulpes évolutives à la sortie d'un récipient.

(30) Priorité: 08.02.78 FR 7803473
08.02.78 FR 7803475

(43) Date de publication de la demande:
22.08.79 Bulletin 79/17

(45) Mention de la délivrance du brevet:
09.02.83 Bulletin 83/6

(84) Etats contractants désignés:
BE CH DE FR GB IT LU NL SE

(56) Documents cités:
FR - A - 1 475 741
FR - A - 2 055 795
FR - A - 2 197 479
GB - A - 620 173
UA - A - 3 334 675
US - A - 3 433 245

(73) Titulaire: **SAINT-GOBAIN INDUSTRIES**
62, Bd Victor Hugo
F-92209 Neuilly sur Seine (FR)

(72) Inventeur: **Delcoigne, Adrien**
25, Avenue Marie Amélie
F-60500 Chantilly (FR)
Inventeur: **Lanneau, Jacques**
24, Résidence "La Belle Fontaine"
F-60600 Breuil-Le-Vert (FR)

(74) Mandataire: **Eudes, Marcel et al,**
Saint-Gobain Recherche 39 Quai Lucien Lefranc
F-93304 Aubervilliers Cedex (FR)

(56) Documents cités:

ANGEWANDTE MESS + REGELTECHNIK, vol. 3, no. 21, 5 novembre 1963, Cobourg.
"Regelventile für feinkörnige-Schüttgüter, Schlamm, Flüssigkeiten und Vakuen", pages 205 à 208.

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

Procédé et dispositif de réglage du débit de pulpes
évolutives à la sortie d'un récipient

La présente invention concerne la régulation du débit de pulpes évolutives à la sortie d'un récipient.

On appelle pulpes évolutives des liquides dans lesquels se produit une certaine réaction donnant lieu à une transformation physique ou chimique susceptible notamment de faire apparaitre une phase solide ou de modifier les caractéristiques de la phase solide chargeant initialement ledit liquide. Comme exemple de pulpe évolutive, on peut citer le plâtre qui, mélangé à l'eau, prend en masse. Cette invention s'applique dans l'industrie des liants hydrauliques, du plâtre et en général dans toutes les industries où il est nécessaire de régler le débit de pulpes évolutives transportées par canalisations.

Pour interrompre ou faire varier et régler à une valeur déterminée le débit d'un liquide, il est connu d'utiliser des vannes à déformation élastique. De telles vannes sont constituées par un corps tubulaire rigide et par une capsule cylindrique intérieure, telle qu'un manchon, suffisamment élastique pour être déformée. La fermeture de la vanne est obtenue par compression du manchon élastique, soit sous l'action mécanique d'un système, vis-écrou-volant, soit sous l'action d'un fluide sous pression, eau ou air, admis entre le corps et le manchon. Lorsqu'aucune action mécanique ou pneumatique n'est exercée sur le manchon, la vanne assure le passage direct du produit à plein débit; lorsque le manchon subit une action qui le déforme, la section de l'orifice de passage est diminuée et la vanne assure le passage du produit à débit réduit; lorsque l'action mécanique ou pneumatique est suffisamment forte, les parois élastiques arrivent à se coller l'une à l'autre, fermant ainsi totalement la vanne.

De telles vannes fonctionnant en régime stationnaire sont recommandées pour des liquides visqueux, pâteux ou abrasifs. On peut même sur de telles vannes de grosses dimensions faire varier l'action mécanique on pneumatique exercée sur le manchon élastique de façon à réaliser un malaxage par exemple d'un produit thixotrope, ou un concassage d'un bouchon de matière qui obstrue.

Ainsi dans le brevet GB 620 173, la vanne à manchon élastique se contracte et se relache périodiquement pour malaxer le produit thixotrope qui passe à travers elle et lui communiquer de l'énergie. On évite ainsi qu'il ne durcisse et on facilite son écoulement. Le contrôle du débit au travers de la vanne se fait en réglant les durées de contraction et de relachement du manchon. Cette vanne règle un débit à une valeur déterminée, mais n'assure pas une régulation du débit en fonction par exemple de la quantité de produit contenu dans un récipient à la sortie duquel elle serait placée.

De tout façon, compte tenu de sa grosseur, de la nécessaire épaisseur et rigidité de son manchon pour pouvoir malaxer, elle serait incapable d'assurer une régulation fine. En outre, s'il s'agissait de délivrer non pas un produit thixotrope mais un produit évolutif tel un mélange de plâtre et d'eau, des dépôts se formeraient dans le manchon, dépôts qui modifieraient la section de passage et les réglages initiaux.

Dans le brevet US 3 433 245, on propose de monter une telle vanne à manchon élastique à la sortie d'un récipient, de la commander par un système de régulation comportant un indicateur de niveau placé dans le récipient et un servo-commande, pour réguler l'écoulement à la sortie du récipient d'un fluide contenant des particules solides en suspension, maintenu dans ledit récipient. Pour favoriser l'écoulement, la vanne est constamment soumise à des vibrations à l'aide d'un dispositif mécanique indépendant du système de régulation. Tant qu'aucune hétérogénéité ne vient se bloquer dans la vanne, l'indicateur de niveau envoie des signaux au servo-commande, lequel agit sur la pression dans un circuit hydraulique dirigé sur la vanne, et ainsi l'écoulement est régulé de façon à maintenir un niveau constant de produit dans le récipient. Mais lorsque la vanne est obstruée par une hétérogénéité contenue dans le fluide, l'écoulement est perturbé, le niveau dans le récipient monte, l'indicateur de niveau se bloque contre une butée et la régulation est sans effet. Il est bien prévu que lorsque la butée est atteinte, viennent se superposer aux signaux issus du système de régulation qui continuent d'être dirigés sur la vanne, des signaux pulsatoires, de même nature, qui déclenchent dans le manchon de la vanne des successions de contractions et de dilatations de grande amplitude pour détruire la masse compacte de produit qui obstrue et/ou pour favoriser son passage, mais il n'en demeure pas moins que des obstructions se produisent, que l'écoulement est interrompu ou tout du moins perturbé même si le système de régulation continue à fonctionner et à fournir ses signaux de régulation, lesdits signaux étant alors inopérants puisque supplantés par les signaux pulsatoires. Un tel dispositif ne peut donc pas garantir à la sortie d'un récipient, un écoulement régulier dont le débit soit régulé de façon permanente quelles que soient les circonstances.

D'autres systèmes pour régler des débits sont connus. Ainsi dans le brevet US 3 334 674, un fléau de balance prend en compte un poids de produit, actionne un contacteur, lequel déclenche mécaniquement l'ouverture ou la fermeture d'un volet. Mais de la même façon qu'une vanne classique, un tel volet risque de se bloquer à cause de dépôts de produit évolutif, et en outre ce système n'assure qu'un réglage en tout ou rien.

Dans le brevet français 2 197 479 un système pneumatique de régulation donne un signal à un relais qui commande un clapet d'ouverture. Mais là encore ce système n'interdit pas le dépôts de produit évolutif, et à la longue les réglages risquent d'être faussés, et finalement le système sera totalement bloqué par un bouchon de produit qui aura durci.

Tous ces dispositifs de l'art antérieur ne permettent pas d'assurer en permanence à la sortie d'un récipient un écoulement régulier, finement régulé d'un produit évolutif fluide tel un mélange de plâtre et d'eau. Ils n'empêchent pas non plus la formation de dépôts qui perturbent les réglages et à la longue finissent par obstruer totalement. Tour au plus détruisent-ils et facilitent-ils l'évacuation des dépôts déja formés, mais ceux-ci constituent alors des hétérogénéités d'une nature différente du produit qui s'écoule normalement, hétérogénéités qui peuvent être incompatibles avec les installations en amont et les utilisations ultérieures du produit délivré.

La présente invention vise à éviter ces inconvénients et elle propose non pas de détruire les dépôts une fois formés mais de les empêcher de se former, sans malgré cela perturber la régulation et l'écoulement régulé. Ainsi les deux actions, régulation et lutte contre la formation de dépôts peuvent coexister, et produire leurs effets sans se perturber l'une l'autre.

Pour cela, elle propose un procédé pour régler le débit de pulpes évolutives, notamment un mélange de plâtre et d'eau à la sortie d'un récipient de façon à maintenir constante la quantité de pulpes à l'intérieur dudit récipient, dans lequel on règle en continu le débit à la sortie du récipient à l'aide d'une vanne à passage direct à manchon élastique commandée par un système pneumatique de régulation associé à un dispositif qui prend en compte la quantité desdites pulpes dans le récipient et dans lequel pour empêcher la formation de dépôts sur la paroi interne du manchon élastique on superpose un régime de signaux pulsatoires au signal de régulation proprement dit qui détermine la section de passage au travers du manchon dans la vanne à passage direct, ce procédé étant tel que:

— le système pneumatique de régulation est un système à fuite auquel est associé une balance de forces qui prend en compte simultanément le poids du récipient contenant les pulpes évolutives et des vibrations engendrées dans ledit récipient pour produire le signal de régulation proprement dit lequel se trouve ainsi modulé directement et en permanence par ledit régime des signaux pulsatoires correspondant aux vibrations engendrées dans le récipient;

— les signaux pulsatoires ainsi superposés en permanence au signal de régulation proprement dit, provoquent, en permanence, des déformations périodiques du manchon élastique de la vanne à passage direct pratiquement sans changement de la valeur de la section de passage délimitée par ledit manchon, cette dernière étant fonction du signal de régulation proprement dit.

Pour obtenir sous l'effet des signaux pulsatoires des déformations périodiques du manchon qui n'affectent pratiquement pas la section de passage, on fait prendre au manchon, sous les pressions de travail une forme en étoile.

L'invention propose également un dispositif pour régler le débit de pulpes évolutives, notamment un mélange de plâtre et d'eau, à la sortie d'un récipient, de façon à maintenir constante la quantité de pulpes à l'intérieur dudit récipient, dans lequel une vanne à passage direct à manchon élastique placée à la sortie dudit récipient règle en continu ledit débit en fonction d'un signal de régulation produit par un système pneumatique de régulation associé à un dispositif qui prend en compte la quantité desdites pulpes dans le récipient et dans lequel pour empêcher la formation de dépôts sur la paroi interne du manchon élastique de moyens sont prévus pour superposer un régime de signaux pulsatoires au signal de régulation proprement dit qui détermine la section de passage à travers le manchon dans la vanne à passage direct, ce dispositif étant tel que:

— le système pneumatique de régulation est un système à fuite auquel est associée une balance de forces qui prend en compte simultanément le poids du récipient contenant les pulpes évolutives et des vibrations engendrées dans ledit récipient, pour produire le signal de régulation proprement dit, lequel se trouve ainsi modulé directement et en permanence par ledit régime de signaux pulsatoires correspondant aux vibrations engendrées dans le récipient par des moyens modulateurs,

— les signaux pulsatoires ainsi superposés en permanence au signal de régulation proprement die provoquent en permanence des déformations périodiques du manchon élastique de la vanne à passage direct pratiquement sans changement de la valeur de la section de passage délimité par ledit manchon, cette dernière étant fonction du signal de régulation proprement dit.

Pour obtenir sous l'effect des signaux pulsatoires des déformations périodiques du manchon qui n'affectent pratiquement pas la valeur de la section de passage on choisit le manchon en un caoutchouc souple, cylindrique et pratiquement de même section lorsqu'il est au repos que l'enveloppe rigide qui doit le contenir, et on le monte à l'intérieur de ladite enveloppe, avec peu ou pas de tension, de façon que sous l'action des pressions de travail il prenne une forme en étoile facilement déformable.

L'invention sera maintenant décrite en se référant aux figures qui représentent:

Figure 1, une vanne pneumatique à déformation élastique;

Figure 2, un dispositif de réglage du débit de pulpes évolutives;

Figure 3, une coupe de la vanne en cours de fonctionnement;

Figure 4, un dispositif de régulation du débit de pulpes évolutives utilisant un système pneumatique de régulation à fuite;

Figure 5, une vue élargie d'un détail du dispositif de la figure 4 à savoir la buse et l'extrémité du fléau de la balance de forces;

Figure 6, un vue détaillée de la vanne V.

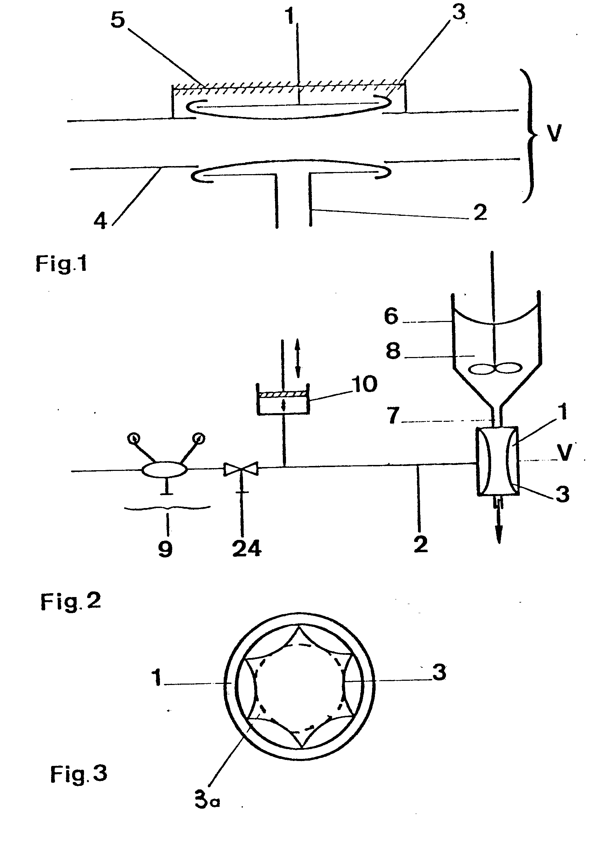

La figure 1 représente une vanne V à déformation élastique du type de celle utilisée dans la presente invention. Elle est constituée par un corps ou enveloppe rigide 1, de forme cylindrique dans notre exemple de réalisation, avec une tubulure latérale 2 d'amenée du fluide de commande et par un manchon interne 3, élastique, cylindrique également et dont la section est sensiblement égale à la section interne du corps rigide. Les extrémités dudit manchon 3 sont maintenues accolées à l'enveloppe 1; par exemple, elles sont rabattues sur le bord de l'enveloppe 1 et serrées par des colliers et/ou un élément de tube 4 de même forme que l'intérieur de l'enveloppe 1 mais de dimensions légèrement inférieures est enfoncé à chaque bout de la vanne V. Les deux colliers de chaque extrémité de la vanne V et/ou les deux éléments de tube 4 sont assemblés par des ensembles tiges filetées-écrous 5.

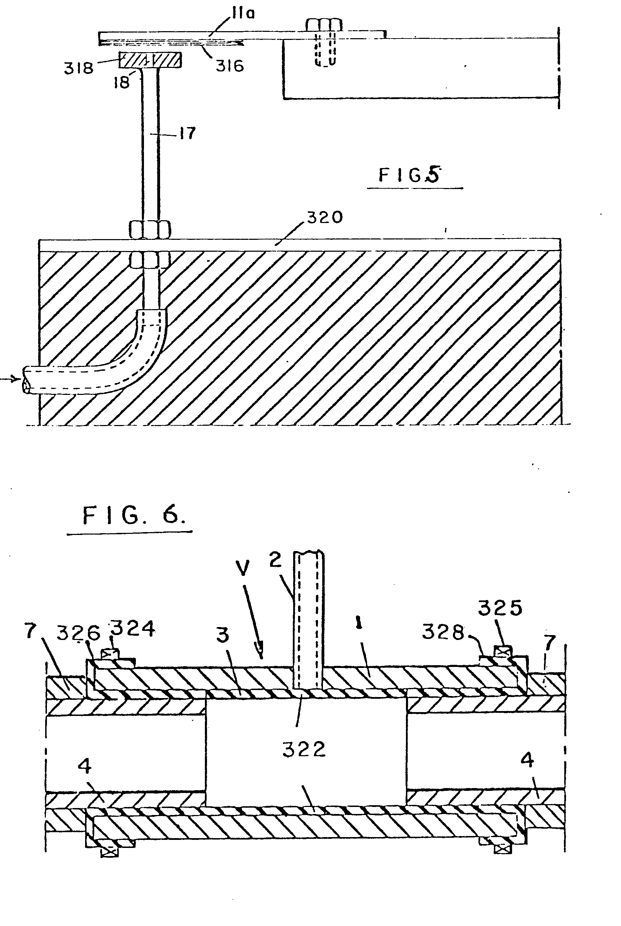

La figure 6 est une coupe longitudinale de la vanne V de la figure 1 avec son enveloppe rigide 1, son manchon élastique 3 et sa tubulure latérale 2 d'amenée du fluide de commande, avec ses deux éléments de tube 4 enfoncés aux extrémités de l'enveloppe rigide 1 pinçant les extrémités du manchon 3 contre l'enveloppe 1, tout en laissant malgré tout libre la partie médiane 322 dudit manchon, avec ses deux colliers 324 et 325 enserrant les bords libres 326 et 328 du manchon 3 rabattus sur l'extérieur de l'enveloppe rigide 1. Dans un exemple de réalisation illustré par cette Figure 6, l'enveloppe rigide 1 a 82 mm de long et 33,5 mm de diamètre, les éléments de tubes 4 ont un diamètre de 32 mm, le manchon 3 pris au repos a 140 mm de long, 0,8 mm d'épaisseur, environ 46 mm de demi-périmètre, ce qui correspond à environ 29 mm de diamètre. Pour fabriquer la vanne, on introduit le manchon 3 à l'intérieur de l'enveloppe 1, on redouble un bord libre, par exemple le bord 328, à l'extérieur de l'enveloppe 1 et on l'enserre avec le collier 325, on étire le manchon légèrement en longueur d'environ 15 mm, on redouble le deuxième bord libre, par exemple 326, sur l'enveloppe 1 et on le maintient avec le collier 324, les éléments de tube 4 sont ensuite mis en place. Le manchon 3 est en une matière imperméable élastique souple, par exemple en caoutchouc tel qu'un échantillon rectangulaire dudit caoutchouc de 2 cm de large et de 10 cm de long s'allonge de 5 cm quand on l'étire en lui accrochant un poids de 1,2 kg à une de ses extrémités.

Dès que le manchon 3 est soumis à une pression, il prend une configuration en étoile 3b, montrée dans la Figure 3, configuration facilement déformable avec une faible variation de pression. Ainsi un manchon en un caoutchouc du type de celui déjà décrit, ayant au repos 32 mm de diamètre et 82 mm de long voit le diamètre d'un cercle inscrit 3a dans l'étoile 3b passer de 21 mm à 15 mm quand la pression de l'air dirigé sur le manchon varie de 100 à 300 mm de mercure.

La Figure 2 représente un dispositif de réglage du débit de pulpes évolutives conforme à l'invention. Elle montre un récipient, réacteur ou mélangeur 6, muni à sa partie basse d'un orifice de vidange sur lequel est branché un tuyau 7 équipé d'une vanne V de régulation du débit semblable à celle des Figures 1, 3, 6. Ce tuyau 7 pourra avantageusement être muni d'un clapet de fermeture ou posséder une extrémité libre sur laquelle on pourra mettre un bouchon.

Le récipient 6 est alimenté en permanence avec des ingrédients qu'on veut mélanger et/ou il contient une certaine quantité de pulpes évolutives 8, par exemple un mélange de plâtre et d'eau dont on veut régler le débit d'écoulement par le tuyau d'évacuation 7. La tubulure latérale 2 d'amenée du fluids de commande de la vanne V est alimentée en air comprimé, la pression de cet air étant réglée par un ensemble détendeur à double détente 9 avec manomètre, orifice calibré et robinet micrométrique, à une valeur qui correspond à un débit d'écoulement déterminé du produit 8 au travers de la vanne V, donc à une déformation déterminée du manchon interne 3. Sur cette tubulure 2 d'amenée du fluide de commande est installé un piston 10 animé d'un mouvement alternatif et modulant la pression de l'air comprimé envoyé entre le corps 1 et le manchon élastique 3 de la vanne V.

Dans d'autres modes de réalisation, le piston 10 pourra être remplacé par n'importe quel autre système capable de produire une modulation de la pression du fluide de commande de la vanne V.

Le dispositif de la Figure 2 fonctionne de la manière suivante: de l'air comprimé, dont la pression est ajustée par l'ensemble détendeur 9 à une valeur déterminée Po, est envoyé par la tubulure 2 de commande de la vanne V. Cet air comprime le manchon 3, celui-ci prend une forme étoilée, représentée sur la Figure 3 et l'orifice de passage du liquide 8 contenu dans le récipient 6 se trouve ainsi rétréci. On obtient le débit désiré en agissant sur la pression P de l'air de commande. Le piston 10, animé d'un mouvement alternatif, crée une modulation de cette pression P autour de la valeur Po, ce qui a pour effet de faire se contracter et se relâcher périodiquement le manchon 3. De cette façon, le manchon est en mouvement constant et cela évite que du produit 8 ne s'accumule à l'endroit du rétrécissement. Dans un exemple de réalisation, la fréquence des pulsations transmises au manchon 3 est de l'ordre de 2,4 Hz.

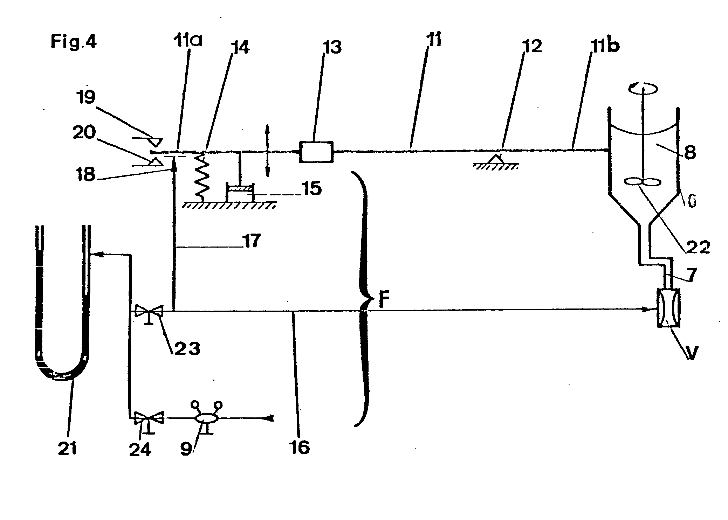

La figure 4 représente un dispositif de régulation du débit de pulpes évolutives, conforme à l'invention.

On retrouve le récipient ou le mélangeur 6, contenant une quantité déterminée de produit 8, alimenté en permanence en nouveau produit 8 ou en ses ingrédients dans les proportions désirées, muni à sa partie inférieure d'un orifice de vidange sur lequel on branche un tuyau 7 équipé d'une vanne V. Ledit mélangeur est porté par un des bras 11b d'un fléau de balance de forces 11 oscillant sur un couteau 12, l'équilibre d'un fléau 11 étant assuré par un ressort 14 et par un contrepoids 13 agissant sur l'autre bras 11a du fléau de balance 11.

La position du contrepoids peut être ajustée sur le bras de fléau pour que l'équilibre puisse être trouvé pour toute quantité désirée de produit 8 dans le mélangeur 6. Un amortisseur 15 est relié à l'un des bras du fléau 11, par exemple le bras 11a. La commande de réglage de la vanne V est assurée par un système pneumatique à fuite F. Un tel système F possède une arrivée de fluide, de l'air en général, sous une pression Po, ledit fluide étant distribué dans deux branches, une branche 16 reliée à la tubulure latérale 2 d'amenée du fluide de commande de la vanne V que nous appelerons "branche de commande 16" et une branche 17 débouchant à l'air libre par une buse 18 qui affleure l'extrémité du bras de fléau 11a et que nous appellerons "branche de fuite 17" pour tenir compte du fait qu'une fuite se produit entre la buse 18 et l'extrémité du bras du fléau 11a. Deux butées d'alarme 19 et 20 encadrent en hauteur l'extrémité du bras de fléau 11a, limitant ainsi les oscillations du fléau 11 et par conséquent les variations de poids du mélangeur par rapport au poids désiré, déterminé par le contrepoids 13. La pression P est réglée à l'aide d'un ensemble détendeur à double détente 9 et mesurée par un manomètre 21 figuré par un tube à mercure en U.

Le produit est agité à l'intérieur du mélangeur 6 par une hélice ou une turbine mélangeuse 22.

La turbine 22, son arbre, le moteur, les poulies et les courroies (non représentés sur les figures) qui l'entrainent et de façon générale, l'ensemble des moyens liés à la turbine 22 sont rendus solidaires du mélangeur 6, si bien qu'ils forment un seul ensemble et qu'il n'y a pas de répulsion du mélangeur 6 par la turbine 22. La sortie de la vanne V est désolidarisée de toute autre installation en aval. Ainsi, du fait de ces deux mesures, la pesée effectuée par la balance de forces prend réellement en compte la quantité de produit présente dans le mélangeur 6.

Ce dispositif de régulation du débit de pulpes évolutives fonctionne de la manière suivante: le mélangeur est alimenté continu en produit 8 ou en ses constituants. Ledit produit est agité par la turbine 22, l'écoulement par le tuyau 7 se fait également en continu, le débit étant régulé par la vanne V.

La pression P de l'air admis dans le système de régulation à fuite F est ajustée à une valeur Po de façon à obtenir, lorsqu'on supprime le débit de fuite par application manuelle de l'extrémité du bras de fléau 11a sur la buse 18, un certain état de fermeture de la vanne V qui règle l'écoulement du produit à un débit inférieur à celui que l'on désire obtenir, lorsqu'on augmente au maximum le débit de fuite par mise en contact de l'extrémité du bras de fléau 11a avec la butée d'alarme supérieure 19, un certain état d'ouverture de la vanne V tel que le débit soit supérieur à celui que l'on aura à obtenir. Le fléau étant libéré, on règle la position du contrepoids 13 sur le bras de fléau 11a de façon à ce que le fléau prenne une position intermédiaire entre ses deux positions limites obtenues lorsque l'extrémité du bras 11a est en contact soit avec la butée 19, soit avec la butée 20, ladite position intermédiaire déterminant un débit de sortie du mélangeur égal à son débit moyen d'alimentation.

Toute variation de poids de produit 8 dans le mélangeur 6 entraîne un déséquilibre du fléau de balance 11. Ainsi, un excès de poids a pour effet d'augmenter la distance extrémité de bras de fléau 11a-buse 18, donc d'augmenter la fuite. La pression P étant constante, la pression de l'air dmis entre le manchon 3 et le corps 1 diminue, le manchon 3 se relâche, le débit d'écoulement du produit s'accroît, le mélangeur 6 se vide plus vite, rétablissant ainsi l'équilibre. Au contraire, un défaut de poids entraîne une fermeture de la vanne, donc une rétention plus importante du produit 8 dans le mélangeur 6, ce qui a pour effet de rétablir l'équilibre.

Nous avions indiqué dans le dispositif illustré par la Figure 2, qu'un piston réalisait une modulation de la pression de l'air de commande envoyé sur la vanne V. Dans le cas du dispositif de la Figure 4, des vibrations sont engendrées par la turbine mélangeuse 22 et par le mouvement du produit dans la cuve 6; ces vibrations entraînent des oscillations de fléau 11 et, par suite, des pulsations de la pression envoyée à la vanne V.

Sous l'effet d'une certaine pression, le manchon 3 a pris un contour en étoile facilement déformable et par suite des pulsations, ce contour se déforme rapidement, empêchant ainsi que des dépôts de produit 8 ne se forment sur sa surface intérieure. Le manchon pourra être réalisé avec n'importe quelle matière imperméable élastique, mais il sera nécessaire, avant tout réglage du dispositif, de déterminer les caractéristiques d'élasticité du matériau employé en réalisant un diagramme donnant la section d'ouverture de la vanne en fonction de la pression. Le manchon élastique pourra être réalisé par un matériau très souple du type caoutchouc de chambre à air. On obtiendra ainsi une vanne légère, réagissant sous une faible pression de l'ordre de 0,25 bar, la pression totale Po envoyée dans le système pneumatique à fuite étant de l'ordre de 1 bar. L'amortisseur 15 sera choisi tel qu'il laissera subsister les pulsations favorables. Une vanne 23 pourra être installée sur le circuit pneumatique en aval du manomètre, avant la séparation dudit circuit en deux branches 16 et 17. Ainsi, après que les conditions de fonctionnement de l'installation auront été déterminées, la remise en marche de l'installation après un arrêt pourra se faire plus aisément sans qu'il soit nécessaire de procéder à de nouveaux réglages. On fermera la vanne 23 et on règlera la pression P à la valeur Po que l'on connaîtra déjà. La butée d'alarme 19 pourra être reliée à une vanne interrompant l'alimentation en produit 8 du mélangeur 6 lorsque l'extrémité du fléau 11 vient la toucher.

Une vanne supplémentaire à pointeau 24 pourra être mise en place à la suite de l'ensemble détendeur 9 pour assurer le débit constant. Avec des débits donnés de matières à l'alimentation du mélangeur, le temps de séjour du mélange dans la cuve du mélangeur est déterminé par le taux de remplissage de ladite cuve (au moins 3 secondes et préférentiellement entre 15 et 30 secondes). Jusqu'à maintenant, compte tenu des difficultés de réglage du débit des pulpes évolutives, comme le mélange plâtre/eau, du fait des dépôts qui se produisaient dans les vannes de réglage, pour ajuster le taux de remplissage du mélangeur, on faisait varier les débits de matière à l'alimentation, sans toutefois modifier le rapport des débits, ce qui était très difficile. Avec le dispositif proposé dans l'invention, le réglage du débit de pulpes évolutives n'est plus un problème et on ajuste le temps de séjour du mélange dans la cuve du mélangeur à la valeur désirée, ou encore le taux de remplissage du mélangeur, en réglant le débit de sortie du mélange au travers de la vanne V et il ne se produit, malgré tout, pas de dépôt dans cette vanne. Ceci est possible en envoyant sur la vanne, en plus du signal de régulation, un signal pulsatoire. Ainsi aucun dépôt ne se fait, la vanne reste propre et à un signal de régulation donné correspond ainsi toujours la même section de passage de la vanne, donc toujours le même débit.

La figure 5 est une vue partielle agrandie du dispositif de l'invention dans la région de la buse 18 de la Figure 4. Le tuyau 17 alimente en air comprimé la buse 18, laquelle est protégée de tout contact brutal avec une palette 317 fixée sous l'extrémité du bras de fléau 11a, grâce à une collerette plus large 318. Le tuyau 17 est supporté par une plaque 320. La distance entre la palette 317 et la buse 18 détermine l'importance de la fuite et par contrecoup détermine la pression de l'air envoyé sur le manchon 3 de la vanne V.

Avantageusement, le couteau sur lequel oscille le fléau de la balance de forces, est situé entre le moteur d'entrainement (non représenté) de la turbine 22 et le mélangeur 6, c'est à dire sensiblement à l'aplomb du centre de gravité de l'ensemble qu'ils constituent, de façon à ce que la masse de ce matériel ne fausse pas la pesée du produit dans le mélangeur, en particulier lorsque le fléau n'est pas horizontal.

En outre, pour provoquer les pulsations dans la vanne on pourra toujours associer un piston agissant dans un cylindre relié à l'alimentation de la vanne et les vibrations produites par la turbine.

Il a été dit que l'invention concernait le réglage du débit de pulpes évolutives, mais elle peut s'appliquer aussi au cas des pulpes évolutives contenant en outre des charges inertes finement divisées, par exemple des fibres de verre coupées et, à fortiori, au cas des liquides non évolutifs chargés ou non. Le terme pulpes évolutives recouvre donc les pulpes évolutives proprement dites, les pulpes évolutives contenant en outre des charges inertes et les liquides chargés ou non.

**Revendications**

1. Procédé pour régler le débit de pulpes évolutives, notamment un mélange de plâtre et d'eau à la sortie d'un récipient (6), de façon à maintenir constante la quantité de pulpes à l'interieur dudit récipient (6), dans lequel on règle en continu le débit à la sortie du récipient à l'aide d'une vanne (V) à passage direct à manchon élastique (3) commandée par un système pneumatique de régulation associé à un dispositif qui prend en compte la quantité desdites pulpes dans le récipient (6) et dans lequel pour empêcher la formation de dépôts sur la paroi interne du manchon élastique (3) on superpose un régime de signaux pulsatoires au signal de régulation proprement dit qui détermine la section de passage au travers du manchon (3) dans la vanne à passage direct (V) caractérisé en ce que:

— le système pneumatique de régulation est un système à fuite (F) auquel est associé une balance de forces (11, 12, 13, 14) qui prend en compte simultanément le poids du récipient (6) contenant les pulpes évolutives et des vibrations engendrées dans ledit récipient (6) pour produire le signal de régulation proprement dit lequel se trouve ainsi modulé directement et en permanence par ledit régime des signaux pulsatoires correspondant aux vibrations engendrées dans le récipient (6);

— les signaux pulsatoires ainsi superposées en permanence au signal de régulation proprement dit, provoquent, en permanence, des déformations périodiques du manchon élastique (3) de la vanne à passage direct (V) pratiquement sans changement de la valeur de la section de passage délimitée par ledit manchon (3), cette dernière étant fonction du signal de régulation proprement dit.

2. Procédé selon la revendication 1, caractérisé en ce que la fréquence des déformations du manchon élastique (3) dues aux signaux pulsatoires est de l'ordre de 2,4 Hz.

3. Procédé selon l'une quelconque des revendications 1 et 2, caractérisé en ce que les vibrations à l'origine des signaux pulsatoires sont engendrées par une turbine mélangeuse (22) agissant dans le récipient (6).

4. Procédé selon l'une quelconque des revendications 1 à 3, caractérisé en ce que dans les conditions de travail le manchon élastique (3) prend une forme en étoile.

5. Dispositif pour régler le débit de pulpes évolutives, notamment un mélange de plâtre et d'eau, à la sortie d'un récipient (6), de façon à maintenir constante la quantité de pulpes à l'intérieur dudit récipient (6), dans lequel une vanne (V) à passage direct à manchon élastique (3) placée à la sortie dudit récipient (6) règle en continu ledit débit en fonction d'un signal de régulation produit par un système pneumatique de régulation associé à un dispositif qui prend en compte la quantité desdites pulpes dans le récipient (6) et dans lequel pour empêcher la formation de dépôts sur la paroi interne du manchon élastique (3) des moyens sont prévus pour superposer un régime de signaux pulsatoires au signal de régulation proprement dit qui détermine la section de passage à travers le manchon (3) dans la vanne (V) à passage direct, caractérisé en ce que:

— le système pneumatique de régulation est un système à fuite (F) auquel est associée une balance de forces (11, 12, 13, 14) qui prend en compte simultanément le poids du récipient (6) contenant les pulpes évolutives et des vibrations engendrées dans ledit récipient, pour produire le signal de régulation proprement dit, lequel se trouve ainsi modulé directement et en permanence par ledit régime de signaux pulsatoires correspondant aux vibrations engendrées dans le récipient (6) par des moyens modulateurs,

— les signaux pulsatoires ainsi superposés en permanence au signal de régulation proprement dit provoquent en permanence des déformations périodiques du manchon élastique (3) de la vanne à passage direct (V) pratiquement sans changement de la valeur de la section de passage délimité par ledit manchon (3), cette dernière étant fonction du signal de régulation proprement dit.

6. Dispositif selon la revendication 5, caractérisé en ce que les moyens modulateurs comportent une turbine mélangeuse (22) tournant à l'intérieur du récipient (6).

7. Dispositif selon l'une quelconque des revendications 5 et 6, caractérisé en ce que la section de passage délimitée par le manchon (3) de la vanne (V) est plissée en forme d'étoile lorsque ledit manchon est soumis à un signal de régulation.

8. Dispositif selon la revendication 7, caractérisé en ce que la manchon (3) qui prend une forme plissée en étoile lorsqu'il est soumis au signal de régulation est un manchon en un caoutchouc souple, du type caoutchouc de chambre à air, cylindrique et pratiquement de même section lorsqu'il est au repos que l'intérieur de l'enveloppe rigide de la vanne (V) qui le contient, monté à l'intérieur de ladite enveloppe avec peu ou pas de tension longitudinale.

**Patentansprüche**

1. Verfahren zum Regulieren der Ausströmmenge sich entwickelnder Pulpen, insbesondere einer Mischung aus Gips und Wasser, am Auslaß eines Behälters (6) derart, daß die Menge der Pulpen im Inneren des Behälters (6) konstant gehalten wird, bei dem die Ausströmmenge am Auslaß des Behälters mit Hilfe eines Durchflußreglers (V) mit elastischer Manschette (3) kontinuierlich geregelt wird, die durch ein pneumatisches Regelsystem gesteuert wird, welches einer Vorrichtung zugeordnet ist, die die Menge der Pulpen im Behälter berechnet und in der zur Vermeidung der Bildung von Sediment auf der Innenwand der elastischen Manschette (3) eine Anzahl pulsierender Signale dem eigentlichen Regelsignal überlagert wird, das den Durchtrittsquerschnitt der Manschette (3) im Durchflußregler (V) festlegt, dadurch gekennzeichnet, daß

— das pneumatische Regelsystem ein Lecksystem (F), mit zugeordnetem Kräfteausgleich (11, 12, 13, 14) ist, welches gleichzeitig das Gewicht des die sich entwickelnden Pulpen enthaltenden Behälters (6), sowie die im Behälter (6) erzeugten Schwingungen berechnet, um das eigentliche Regelsignal zu erzeugen, das bereits unmittelbar und dauernd durch die Anzahl der pulsierenden Signale moduliert ist, die den erzeugten Schwingungen im Behälter (6) entsprechen;

— daß die derart dem eigentlichen Regelsignal Ständig überlagerten pulsierenden Signale ständig periodische Verformungen der elastischen Manschette (3) des Durchflußreglers (V) praktisch ohne Änderung des Querschnittwertes des durch die Manschette (3) festgelegten Durchlasses erzeugen, wobei letztere Funktion des eigentlichen Regelsignals ist.

2. Verfahren nach Anspruch 1, dadurch gekennzeichnet, daß die Frequenz der aufgrund der pulsierenden Signale auftretenden Verformungen der elastischen Manschette (3) in der Größenordnung von 2,4 Hz liegt.

3. Verfahren nach Anspruch 1 oder 2, dadurch gekennzeichnet, daß die Ausgangsschwingungen der pulsierenden Signale von einer sich im Inneren des Behälters (6) befindenden Mischturbine (22) erzeugt werden.

4. Verfahren nach einem der Ansprüche 1 bis 3, dadurch gekennzeichnet, daß die elastische Manschette (3) unter den Arbeitsbedingungen Sternform annimmt.

5. Vorrichtung zum Regeln der Ausströmmenge sich entwickelnder Pulpen, insbesondere einer Mischung aus Gips und Wasser, am Auslaß eines Behälters (6), derart, daß die Menge der Pulpen im Inneren des Behälters (6) konstant gehalten wird, in welchem ein Durchflußventil (V) mit einer elastischen Manschette (3) am Auslaß des Behälters (6) kontinuierlich die Abströmmenge in Abhängigkeit von einem Regelsignal steuert, das durch ein pneumatisches Regelsystem erzeugt wird, das, einer Vorrichtung zugeordnet ist, die die Menge der Pulpen im Behälter (6) berechnet, und in welchem zur Vermeidung der Bildung von Sediment auf der Innenwand der elastischen Manschette (3) Vorrichtungen vorgesehen sind, um eine Anzahl pulsierender Signale dem eigentlichen Regelsignal zu überlagern, das den Durchflußquerschnitt der Manschette (3) im Durchflußregler (V) festlegt, dadurch gekennzeichnet, daß

— das pneumatische Regelsystem ein Lecksystem (F) ist, dem ein Kräfteausgleich (11, 12, 13, 14) zugeordnet ist, welches gleichzeitig das Gewicht des die sich entwickelnden Pulpen enthaltenden Behälter (6), sowie die erzeugten Schwingungen im Behälter (6) berechnet, um das eigentliche Regelsignal zu erzeugen, das bereits unmittelbar und ständig durch die Anzahl der pulsierenden Signale mouduliert ist, die den erzeugten Schwingungen im Behälter (6) entsprechen

— die derart ständig dem eigentlichen Regelsignal überlagerten Signale ständig periodische Verformungen der elastischen Manschette (3) des Durchflußventils (V) erzeugen, ohne praktisch den Wert des durch die Manschette (3) begrenzten Durchtrittsquerschnitts des Durchlasses zu verändern, der die Funktion des eigentlichen Regelsignals ist.

6. Vorrichtung nach Anspruch 5, dadurch gekennzeichnet, daß die Modulatoren eine Mischturbine (22) umfassen, die im Inneren des Behälters (6) umläuft.

7. Vorrichtung nach einem der Ansprüche 5 oder 6, dadurch gekennzeichnet, daß der durch die Manschette (3) des Reglers (V) festgelegte Durchtrittsquerschnitt sternförmig gefaltet ist, wenn die Manschette einem Regelsignal unterworfen ist.

8. Vorrichtung nach Anspruch 7, dadurch gekennzeichnet, daß die Manschette (3), die die Form eines gefalteten Sterns annimmt, wenn sie dem Regelsignal unterworfen wird, eine Manschette aus biegsamen Kautschuk in Form eines zylindrischen Kautschukluftschlauches ist und in Ruhestellung den gleichen Durchmesser wie das Innere der sie ummantelnden starren Ummantelung des Durchflußreglers (V) und wenig oder keine Längsspannung aufweist.

**Claims**

1. Process for controlling the discharge of evolutive pulps, especially a mixture of plaster and water at the outlet of a container (6), so as to maintain constant the quality of pulp in the interior of the said container (6), in which the output of the outlet of the container is continuously controlled with the aid of a direct passage valve (V) having an elastic sleeve (3) controlled by a pneumatic control system associated with an apparatus which takes account of the quantity of the said pulp in the container (6) and in which, in order to prevent the formation of deposits on the internal walls of the elastic sleeve (3) a system of pulsed signals is superimposed on the control signal proper which determines the cross-section of the passage through this sleeve (3) in the direct passage valve (V), characterised in that:

— the pneumatic control system is a leakage system (F) with which is associated a balance of forces (11, 12, 13, 14) which simultaneously takes into account the weight of the container (6) containing the evolutive pulp and vibrations generated in the said container (6) to produce the control signal proper which is thus directly and permanently modulated by the said system of pulsed signals corresponding the the vibrations generated in the container (6);

— The pulsed signals thus permanently superimposed on the control signal proper cause, permanently, periodic deformation of the elastic sleeve (3) of the direct passage valve (V) practically without changing the value of the passage cross-section defined by the said sleeve (3), this latter being a function of the control signal proper.

2. Process according to claim 1, characterised in that the frequency of the deformation of the elastic sleeve (3) due to the pulsed signals is of the order of 2.4 Hz.

3. Process according to either of claims 1 or 2, characterised in that the vibrations which give rise to the pulsed signals are caused by a mixing turbine (22) operating within the container.

4. Process according to any of claims 1 to 3, characterised in that under operative conditions the elastic sleeve (3) becomes star-shaped.

5. Apparatus for controlling the discharge of evolutive pulps, especially a mixture of plaster and water, from the outlet of a container (6) so as to maintain constant the quantity of pulp inside the container (6), in which a direct passage valve (V) having an elastic sleeve (3) arranged at the outlet of the said container (6) continuously controls the said discharge as a function of a control signal produced by a pneumatic control system associated with a device which takes account of the quantity of the said pulp within the container (6) and in which to prevent the formation of deposits on the internal wall of the elastic sleeve (3) means are provided to superimpose a system of pulsed signals on the control signal proper which determines the passage cross-section through the sleeve (3) in the direct passage valve (V) characterised in that:

— the pneumatic control system is a leakage system (F) with which is associated a balance of forces (11, 12, 13, 14) which takes account simultaneously of the weight of the container (6) containing the evolutive pulp and the vibrations generated in the said container, to produce the control signal proper, which is thus directly and permanently modulated by the said system of pulsed signals which correspond to the vibrations caused in the container (6) by the modulating means.

— the pulsed signals thus permanently superimposed on the control signal proper permanently cause periodic deformations of the elastic sleeve (3) of the direct passage valve (V) practically without changing the value of the passage cross-section defined by the said sleeve (3), this latter being a function of the control signal proper.

6. Apparatus according to claim 5, characterised in that the modulating means comprises a mixing turbine (22) rotating inside the container (6).

7. Apparatus according to either of claims 5 or 6, characterised in that the cross section of the passage defined by the sleeve (3) of the valve (V) is folded into a star-shape when the said sleeve is submitted to a control signal.

8. Apparatus according to claim 7, characterised in that the sleeve (3) which adopts a star-shaped folded form when submitted to a control signal is a sleeve of flexible rubber of the rubber air-chamber type, cylindrical and substantially of the same cross-section when at rest as the interior of the rigid casing of the valve (V) which contains it, mounted inside the said valve with little or no longitudinal tension.

Fig.1

Fig.2

Fig.3

Fig.4

FIG 5

FIG. 6.